# EUROPEAN PATENT SPECIFICATION

(11) **EP 3 541 584 B1**
(45) Date of publication and mention of the grant of the patent: **28.01.2026**
(21) Application number: 16795327.2
(22) Date of filing: 15.11.2016
(51) Int. Cl.: B25J 9/16

(54) **AN INDUSTRIAL ROBOT SYSTEM COMPRISING A PLURALITY OF ROBOTS AND A PLURALITY OF SAFETY SENSORS**
INDUSTRIEROBOTERSYSTEM MIT EINER VIELZAHL VON ROBOTERN UND EINER VIELZAHL VON SICHERHEITSSENSOREN
SYSTÈME DU TYPE ROBOT INDUSTRIEL COMPRENANT UNE PLURALITÉ DE ROBOTS ET UNE PLURALITÉ DE CAPTEURS DE SÉCURITÉ

(43) Date of publication of application: 25.09.2019
(73) Proprietor: ABB Schweiz AG, 5400 Baden (CH)
(72) Inventor: DAHLGREN, Roger, 723 53 Västerås (SE); KULLÄNG, Roger, 722 46 Västerås (SE); MELLANDER, Roger, 722 11 Västerås (SE)
(74) Representative: Kransell & Wennborg KB
(86) International application number: PCT/EP2016/077624
(87) International publication number: WO 2018/091064

(56) References cited:
- US-A1- 2015 336 269
- US-A1- 2016 016 315
- US-A1- 2016 193 730
- ASAMA H ET AL: "Design Of An Autonomous And Distributed Robot System: Actress", 19890904; 19890904 - 19890906, 4 September 1989 (1989-09-04), pages 283 - 290, XP010257790
- LYNNE E. PARKER: "ALLIANCE: An Architecture for Fault Tolerant Multi-Robot Cooperation", 2 April 1998 (1998-04-02), XP055519851, Retrieved from the Internet <URL:https://pdfs.semanticscholar.org/e24f/8b7c250253e74708f2c23fafd6352f268766.pdf> [retrieved on 20181029]
- PHAM D T ET AL: "Neuro-fuzzy based adaptive co-operative mobile robots", IECON-2002. PROCEEDINGS OF THE 28TH. ANNUAL CONFERENCE OF THE IEEE INDUSTRIAL ELECTRONICS SOCIETY. SEVILLA, SPAIN, NOV. 5 - 8, 2002; [ANNUAL CONFERENCE OF THE IEEE INDUSTRIAL ELECTRONICS SOCIETY], IEEE, NEW YORK,NY, US, vol. CONF. 28, 5 November 2002 (2002-11-05), pages 2962 - 2967, XP010707721, ISBN: 978-0-7803-7474-4, DOI: 10.1109/IECON.2002.1182867
- MD ABDUR RAHMAN ET AL: "SENORA: A P2P Service-Oriented Framework for Collaborative Multirobot Sensor Networks", IEEE SENSORS JOURNAL, IEEE SERVICE CENTER, NEW YORK, NY, US, vol. 7, no. 5, 1 May 2007 (2007-05-01), pages 658 - 666, XP011176713, ISSN: 1530-437X, DOI: 10.1109/JSEN.2007.894913
- ANDERSON M ET AL: "Improving multirobot, cooperative search via local target queues", INTELLIGENT ROBOTS AND SYSTEMS, 2007. IROS 2007. IEEE/RSJ INTERNATIONAL CONFERENCE ON, IEEE, PISCATAWAY, NJ, USA, 29 October 2007 (2007-10-29), pages 2590 - 2595, XP031222337, ISBN: 978-1-4244-0911-2

## Description

### Field of the invention

The present invention relates to an industrial robot system comprising a plurality of robots and a plurality of safety sensors configured to detect hazardous situations in the vicinity of the robots.

### Background of the invention

For safety reasons, industrial robots are often placed in robot cells. A robot cell may include one or more robots. The robot cell encloses a dangerous area in which there is a risk of collisions with the robots. In order to meet safety requirements, the robot cells are often enclosed by fences having gates/doors with safety monitoring. The purpose of the fence is to prevent people from entering the robot cell when the robots are working. However, there is a plurality of drawbacks with enclosing the robot cell with a fence.

In order to avoid fences around a robot cell, one or more safety sensors configured to detect hazardous situations in the vicinity of the robots are used in combination with a safety control unit including a safety robot supervision system. Each robot has at least one safety sensor configured to detect safety events in the vicinity of the robot. The safety sensors are, for example, cameras, light curtains, and photo detectors, adapted to produce sensor data. It is known to have one or more safety zones defined in relation to each of the robots, and the safety sensors are arranged to detect if a human is entering any of the safety zones. The safety robot supervision system is adapted to detect safety events, such as humans in the vicinity of the robots, based on the sensor data, and to supervise the movements of detected human and the movements of the robots. The safety control unit is configured to adjust the speed of the robot upon detecting that a human is entering any of the safety zones. For example, the speed of the robot can be reduced to zero if there is more than one safety zone, and the human enters the safety zone closest to the robot. The safety sensors can also detect other hazardous situations in the vicinity of the robots.

Today, the robots make use of a Programmable Logic Controller (PLC) as the safety control unit. Each of the robots in the robot cell, and the safety sensors are connected to a safety PLC. The safety PLC is configured to carry out safety actions, such as to stop one or more of the robots in the robot cell. Sensor data from the safety sensors is sent to the safety PLC, which processes the safety data and generates safety commands based on the sensor data. The safety commands are, for example, sent to a safety actuator, such as a circuit breaker, configured to break the power supply to the motors of one or more of the robots upon receiving a stop command. For example, the safety PLC can send commands to the safety actuator to stop the robots, or send commands to the robots to reduce the speeds of the same. The safety PLC comprises a safety logic unit configured to receive the sensor data from the safety sensors, and to generate the safety commands based on the received sensor data. A disadvantage with the safety PLC is that it is expensive and causes a delay in time between any of the sensors detects a safety event and a safety action is carried out. Thus, there is a desire to omit the safety PLC while maintaining a high degree of safety in the robot system.

Attempts in this general direction are known in the art. US2016016315A1 discloses a robot system including a plurality of robotic devices, remote sensors and a common control system. Each of the robotic devices has a robotic arm and a robot controller controlling the motions of the arm. The control system is arranged in communication with the robot controllers and the sensors. The sensors send sensor data to the control system, which forwards the sensor data to the robot controllers. The sensors can be cameras or optical sensors capable to sense information about the physical environment of the robotic arms. For example, the sensors may detect obstacles or moving objects. The robotic devices may take actions in response to the moving objects. US20150336269A1 for its part discloses a system for control of manufacturing including a plurality of robots working together in a work cell. The system includes a plurality of sensors located in the work cell, and a master control unit. The master control unit may stream data from the sensors, and then stream this data to the robots.

### Object and summary of the invention

It is an object of the present invention to at least partly overcome the above problem, and to provide an improved robot system.

This object is achieved by an industrial robot system as defined in claim 1.

The robot system comprises a plurality of robots, each robot including a robot controller for controlling the motions of the robot, and at least one safety sensor configured to detect hazardous situations in the vicinity of the robots and to produce sensor data. The system further comprises an information sharing device connected to the at least one safety sensor and to the robot controllers, and the information sharing device is configured to distribute sensor data from the at least one safety sensor to the robot controllers. Each of the robot controllers comprises a safety logic unit configured to generate safety commands based on sensor data from the at least one safety sensor.

For example, the robots can be located in the same robot cell, or the robots can be located in neighbourring robot cells.

One or more safety sensors are connected to an information sharing device, such as a switch or a router, which distributes sensor data from the one or more safety sensors to the robot controllers. The invention allows sensor data from one or more safety sensors to be broadcasted to several robot controllers. Each of the robot controllers has its own safety logic unit configured to receive sensor data from one or more safety sensors, to make safety decisions based on the received sensor data, and to generate safety commands based on the safety decisions. Thus, the safety PLC in the prior art robot system can be omitted. For example, each of the safety logic units is allowed to make a decision to stop the motion of one or more of the robots based on the sensor data.

Due to the fact that each of the robot controllers has its own safety logic unit, the information sharing device does not need to have any intelligence, and accordingly an inexpensive device, such as a simple switch, can be used as the information sharing device. The invention enables sensor data from one or more safety sensors to be shared in an efficient way. If one or more safety sensors can be shared among several robots in one robot cell, the total installation cost for the robot cell can be reduced due to less need for sensors, cabling, and external safety controllers, such as safety PLCs. Also the time spent in setting up the safety sensors, and safety input to several robots in the robot cell can be reduced, i.e. the integration time of the robot cell can be reduced.

Another advantage of the invention is that the time delay before the robot controller can act on the sensor data from the safety sensors is significantly reduced compared to when the sensor data is first transmitted to the safety PLC. This means that the robot controller can act faster on a safety event. This can be crucial, for example, if a human is detected inside the robot cell and the speed of the robot is to be reduced or the robot is to be stopped in order to avoid an accident.

The robot system according to the invention comprises at least two robots. However, the system may also include other devices and machines, such as conveyers, and movable fixtures, which can also be connected to the information sharing device so that they will receive sensor data from the safety sensors. Those other devices may also include safety logic units configured to make safety decisions based on sensor data from the safety sensors.

With a "safety command" is meant a message including safety information, for example, an instruction to perform a safety action, information about a decision to carry out a safety action, information about current safety status, or a message that everything is ok.

According to an embodiment of the invention, the robot system comprises a plurality of safety sensors configured to detect hazardous situations in the vicinity of the robots and to produce sensor data. The safety sensors are connected to the information sharing device, and the information sharing device is configured to distribute sensor data from the safety sensors to the robot controllers. Each of the robot controllers is allowed to receive sensor data from more than one of the safety sensors, and the safety logic unit is configured to generate safety commands based on sensor data from more than one of the safety sensors.

Each of the safety sensors is connected to the information sharing device, which distributes sensor data from the safety sensors to the robot controllers. The robot controllers can receive sensor data from more than one of the safety sensors. For example, each of the robot controllers receives sensor data from all of the safety sensors, and the robot controller selects which sensor data to be used. This embodiment of the invention allows sensor data from several safety sensors to be broadcasted to several robot controllers. The robot controllers select sensor data that is relevant for the local safety functions, i.e. controller specific safety functions, and/or the overall safety functions of the robot cell. Each of the safety logic units is configured to receive sensor data from more than one safety sensor, and to make safety decisions based on the received sensor data. This embodiment of the invention enables sensor data from different safety sensors to be shared in an efficient way. If a plurality of safety sensors can be shared among several robots in one robot cell, the total installation cost for the robot cell can be reduced due to less need for sensors.

According to an embodiment of the invention, the information sharing device is configured to distribute sensor data from each of the safety sensors to each of the robot controllers. Consequently, each of the robot controllers receives sensor data from each of the safety sensors. The robot controllers can be configured to select which sensor data to be forwarded to the safety logic unit. In this embodiment, all sensor data is distributed to all of the robot controllers, and the robot controllers can select which sensor data to be used. This embodiment makes it possible to use a simple and inexpensive switch as the information sharing device.

According to an embodiment of the invention, each of the robot controllers comprises a subscribe module configured to allow the robot controller to subscribe to sensor data from any of the safety sensors, and the safety logic unit is configured to receive the subscribed sensor data, and the information sharing device is configured to distribute sensor data from the respective safety sensor or safety sensors to each of the robot controllers that subscribe on the sensor data. This embodiment allows each of the robot controllers to subscribe to sensor data from selected safety sensors.

According to an embodiment of the invention, at least one of the safety sensors is configured to detect a human in an area in the vicinity of the robot. The safety sensors comprises, for example, a camera, an IR-sensor, an ultra-sonic detector, or a light curtain.

According to the invention, the safety logic unit is configured to make a decision to reduce the speed of the robot based on the sensor data or to make a decision to stop the motions of the robot based on the sensor data.

According to the invention, the information sharing device is configured to receive the safety commands from the robot controllers and to distribute the safety commands to the robot controllers, and each of the safety logic units is configured to make safety decisions based on received safety commands from the other robot controllers. Since each of the robot controllers is allowed to receive safety commands from the other robot controllers and to make safety decisions based on the received commands from the other robot controllers, the robot controllers can act quickly on a detected safety event. For example, if the safety logic units of one of the robot controllers decide to make an emergency stop of the robot, the safety logic units of neighbouring robots can decide to also carry out an emergency stop, and accordingly the motions of the neighbouring robots are also stopped. This embodiment improves the safety of the robot system.

According to the invention, each of the robot controllers includes a safety stop unit capable to stop the motions of the robot, and each of the safety logic unit is configured to make a decision to stop the motions of the robot based on received sensor data and received safety commands from the other robot controllers. For example, the safety logic unit can be adapted to generate a stop signal for stopping the motions of the robot upon detecting a safety event, and the safety stop unit can be configured to break the power supply to the motors of the robot, and/or to mechanically brake the motors of the robot upon receiving the stop signal from the safety unit. This embodiment reduces the time delay between the point in time when a safety event has been detected and the motions of the robot have been stopped, and accordingly improves the safety of the robot system. According to an embodiment of the invention, the system comprises at least one safety actuator configured to carry out safety actions based on the safety commands from the robot controllers. For example, the safety actuator is capable to place each of the robots in a safe state based on the safety commands. The safety commands can be transmitted directly to the safety actuator from the robot controllers, or via the information sharing device. The safety action can be to break the power supply to the motors of all of the robots and/or to generate an alarm, such as to turn on a warning lamp or to inform a robot operator.

According to an embodiment of the invention, the robot controllers are configured to send the safety commands to the information sharing device, the information sharing device is configured to receive the safety commands from the robot controllers, and to transmit the received safety commands to the safety actuator. The information sharing device can be configured to send the safety commands to the safety actuator and to the other robot controllers. Thus, the robot controllers as well as the safety actuators can also act on the commands. Thus, the safety is further improved in the robot system.

According to an embodiment of the invention, each of the safety sensors is configured to repeatedly send safety data to the information sharing device within a first time interval, each of the robot controllers is configured to repeatedly send safety commands to the information sharing device within a second time interval provided that safety data has been received within the second time interval, and the safety actuator is configured to carry out a safety action if no safety command is received from one of the robots within a defined time limit. If there is no need of any safety action, i.e. no hazardous situations have been detected that require a safety action, the robot sends a safety command to the safety actuator within the second time interval, which includes information that everything is in order and no safety action is needed. In this embodiment, the safety actuator is provided with a watch dog adapted to carry out a safety action, such as to stop one or more of the robots, if no safety command is received from one of the robots within a defined time limit. This embodiment increases the degree of safety in the robot system since a safety action is automatically carried out if any of the information transfer chains between the sensors, the information sharing device, the robots, and the safety actuator is broken. This is, for example, the case if one of the sensors is out of order and cannot deliver any sensor data, or if the information sharing device does not work and will not be able to distribute the sensor data to the robots and/or will not be able to send safety commands to the safety actuator.

According to an embodiment of the invention, said second time interval is longer than the first time interval, and the defined time limit is longer than the second time interval. Thus, time delays in the data transfers in the information sharing device and the robot controllers can be taken into account when the second time interval and the time limit are set. This embodiment ensures that there is no unintentional safety actions performed by the safety actuator due to delays in the information sharing device and the robot controllers. Suitably, the second time interval is at least 20% longer than the first time interval to ensure that robot controller has received the sensor data from the sensor. Suitably, the defined time limit is at least 20% longer than the second time interval to ensure that safety actuator has received the safety commands from the robot controllers.

According to an embodiment of the invention, the safety actuator can be configured to stop the motions of one or more of the robots if no safety command has been received from one of the robots within the defined time limit. For example, the safety actuator is configured to stop the motions of the robot if no safety command has been received from the robot within the defined time limit. The fact that no safety command has been received within the defined time limit indicates that something is wrong with the safety system, and in order to avoid an accident, one or more of the robots are stopped.

According to an embodiment of the invention, each of the robots comprises a plurality of motors, and the safety actuator is capable to break the power supply to the motors of each of the robots. The safety actuator can also be configured to turn off the power supply to other devices and equipment in the robot cell.

According to an embodiment of the invention, the information sharing device is configured to communicate with the robot controllers, the safety sensors, and the safety actuator using a network protocol.

### Brief description of the drawings

The invention will now be explained more closely by the description of different embodiments of the invention and with reference to the appended figures.
- Fig. 1: shows an example of a robot cell including a plurality of safety sensors.
- Fig. 2: shows a block diagram of an example of industrial robot system according to a first embodiment of the invention.
- Fig. 3: shows a block diagram of an example of industrial robot system according to a second embodiment of the invention.

### Detailed description of preferred embodiments of the invention

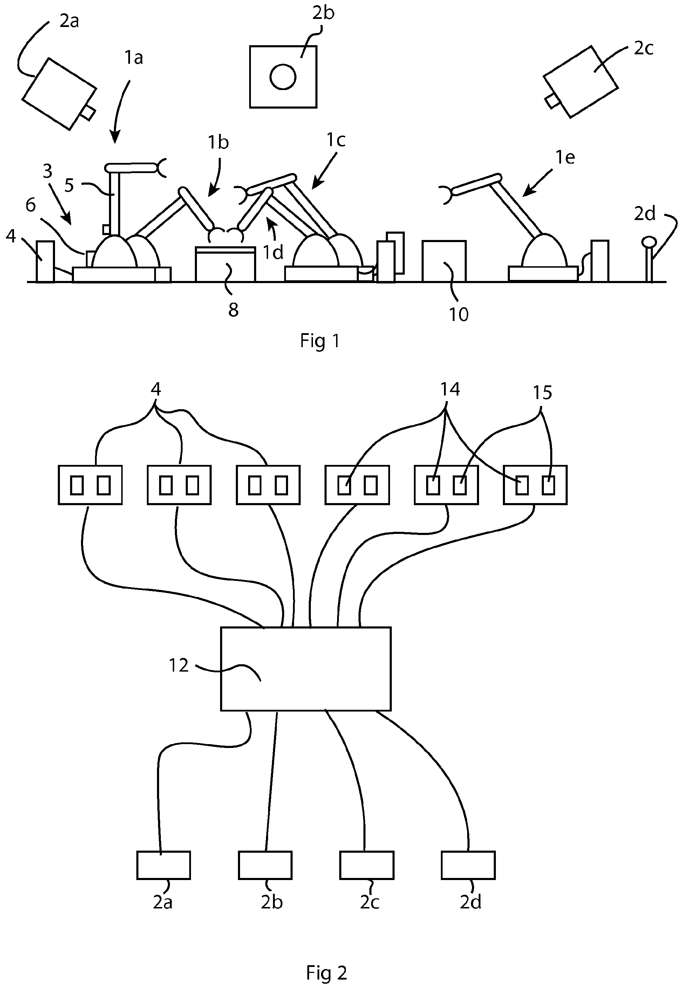

Figure 1 shows an example of a robot cell. The robot cell comprises a plurality of robots 1a-e and a plurality of safety sensors 2a-d configured to detect hazardous situations in the vicinity of the robots. Each of the robots 1a-e includes a manipulator 3 and a robot controller 4 for controlling the motions of the manipulator. The manipulator includes a plurality of arms 5 movable in relation to each other about a plurality of robot joints and a plurality of motors 6 for moving the arms. The robot cell also comprises other devices, such as a conveyer 8 and a rotatable fixture 10 for holding an object while the robot is performing work on the object. At least some of the safety sensors 2a-d are configured to supervise the robot cell and detect if a human is entering the robot cell. For example, the safety sensors 2a-d are Person Sensing Devices (PSD), such as cameras, radars, laser scanners, ultrasound sensors, and light sensors detecting when a light beam is interrupted. For example, different safety zones with different safety levels can be defined in relation to some of the safety sensors, and the safety sensors detect if a human is entering any of the safety zones. The safety sensors produce sensor data, and preferably discrete data. The safety sensors can, for example, be configured to provide data packages including the sensor data.

Figure 2 shows a block diagram of an example of an industrial robot system according to a first embodiment of the invention. The industrial robot system comprises a plurality of robot controllers 4 and a plurality of safety sensors 2a-d configured to detect safety events in the vicinity of the robots 1a-e. A safety event is, for example, to detect a human entering the robot cell, or entering a safety zone. The system comprises an information sharing device 12 connected to the safety sensors 2a-d and to the robot controllers 4. The information sharing device 12 is, for example, a network switch having a plurality of input and output ports. Each of the safety sensors is connected to one of the input ports of the switch, and each of the robot controllers is connected to one of the output ports of the switch. Alternatively, the information sharing device 12 can be a router. Suitably, the information sharing device is configured to communicate with the robot controllers and the safety sensors using a network protocol.

The information sharing device 12 is configured to distribute sensor data from the safety sensors 2a-d to the robot controllers 4 of the robots 1a-e. Each of the robot controllers is allowed to receive sensor data from more than one of the safety sensors. In this embodiment, the information sharing device is configured to distribute sensor data from each of the safety sensors 2a-d to each of the robot controllers 4. The outputs from the sensors are broadcasted to the robot controllers. Thus, it is possible for each of the robot controllers 4 to receive sensor data from all of the safety sensors. The robot controllers 4 then select which sensor data to use. In an alternative embodiment, each of the robot controllers can be provided with a subscribe module configured to allow the robot controller to subscribe to sensor data from one or more of the safety sensors, and the information sharing device is configured to distribute sensor data from the respective safety sensor or safety sensors to each of the robot controllers that subscribes on the sensor data. The subscribe module can be a software module running on the robot controller.

Other devices, for example, emergency stop units, breakers to gates, and safety equipment to machines in the robot cell, can also be connected to the information sharing device 12, and the output from these devices can be broadcasted to the robot controllers in the same way as the sensor data. If an emergency stop unit is connected to the information sharing device 12, all of the robot controllers 4 are allowed to react on the output from the emergency stop unit and, for example, to stop the motions of the respective robot or robots. Thus, the reaction time is reduced, which increases the safety of the robot cell.

The robot controllers 4 include software as well as hardware, such as input and output means, a processor unit including one or more central processing units (CPU), data storage and program storage, for handling main functions of the robot controller such as executing robot control programs, performing path planning, providing orders regarding movements of the manipulator such as generating motor references to the motors of the robot. Each of the robot controllers 4 comprises a safety logic unit 14 configured to make safety decisions based on the received sensor data from the safety sensors 2a-d, and to generate safety commands based on the safety decisions. Suitably, the safety logic unit 14 is a software module stored in the program storage of the robot controller and executed by the processor unit on the robot controller 4.

The safety logic unit 14 is allowed to decide whether the speed of the robot is to be reduced based on the sensor data. The safety logic unit 14 can also be configured to decide to immediately stop the robot based on the sensor data. For example, if a safety-critical object is detected by the sensors, the safety logic unit makes safety decisions based on the current position of the robot, the position of the detected safety-critical object, and predefined safety rules. For example, if a safety-critical object, such as a human, has been detected by one or more of the sensors, and the robot arm is far away from the area in which the safety-critical object has been detected, the safety logic unit can make a decision to let the robot proceed with its work with the same speed. If the distance between the current position of the robot arm and the safety-critical object is less than a first limit value, the safety logic unit can make a decision to reduce the speed of the robot, and if the distance between the current position of the robot arm and the safety-critical object is less than a second limit value, the safety logic unit can make a decision to immediately stop the robot. However, it is possible to implement different rules about how the robot should be controlled when a safety-critical object is at different locations in relation to the robot.

In one embodiment of the invention, one of the safety logic units 14 is configured as a master safety logic unit that receives all sensor data and is allowed to make a decision to immediately stop all of the robots based on the sensor data, and to generate a command to stop the robots. In this embodiment, each safety logic unit is allowed to reduce the speed and to stop the motions of the manipulator connected to the robot controller including the logic unit. However, only the master safety logic unit is allowed to decide to stop the other robots, for example, to generate a command to switch off the power supply to the motors for all of the robots.

In one embodiment of the invention, each of the robot controllers is configured to send the safety commands to the information sharing device 12, and the information sharing device 12 is configured to receive the safety commands from the robot controllers 4 and to send the safety commands to the robot controllers. Thus, the safety commands from any of the robot controllers are broadcasted to the other robot controllers connected to the information sharing device 12. Thus, it is possible for each of the robot controllers 4 to receive safety commands from the other robot controllers and to act based on the safety commands from the other robot controllers 4. The safety logic units of the robot controllers 4 are configured to make safety decisions and to generate safety commands based on received safety commands from the other robot controllers. For example, if the safety logic unit of one of the robots has decided to stop the motions of the robot due to a detected safety event and has generated a stop command, the other robots in the robot cell will receive the stop command, and can make decisions and generate commands to stop their own motions.

In this embodiment of the invention, each of the robot controllers 4 includes a safety stop unit 15 capable to stop the motions of the robot. The safety stop unit 15 is configured to stop the motions of the robot, for example, to break the power supply to the motors of the robot and/or to mechanically brake the motors of the robot, upon receiving a stop command from the safety logic unit 14. The safety stop unit 15 comprises hardware to provide a safe stop of the robot motions. According to this embodiment of the invention, each of the safety logic units 14 of the robot controllers 4 is allowed to make decisions to stop the motions of the robot connected to the respective robot controller based on received sensor data and received safety commands from the other robot controllers connected to the information sharing device 12, and to send a stop command to the safety stop unit 15.

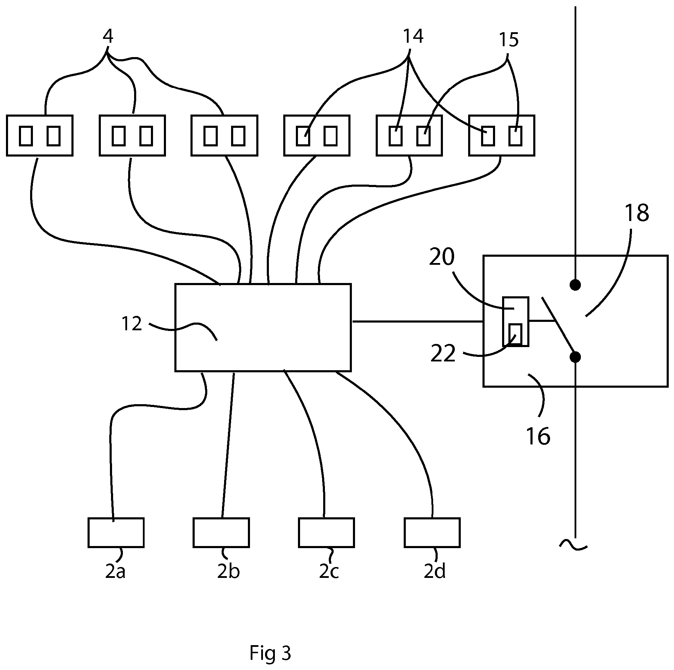

Figure 3 shows a block diagram of an example of industrial robot system according to a second embodiment of the invention. In this embodiment, the robot system comprises a safety actuator 16 configured to carry out safety actions based on safety commands. The safety actuator 16 is arranged as a separate unit, and is not a part of any of the robot controllers. In this embodiment, the safety actuator is connected to the information sharing device 12, and the robot controllers 4 communicate with the safety actuator via the information sharing device 12. The safety actuator 16 is configured to receive the safety commands from the robot controllers 4 and to place each of the robots in a safe state based on the safety commands. For example, the safety actuator 16 is capable to break the power supply to the motors of each of the robots. In one embodiment, the safety actuator 16 includes a circuit breaker 18, such as a relay, configured to turn on and off the power supply to the motors of the robots. Alternatively, the safety actuator 16 may include a plurality of circuit breakers, i.e. one circuit breaker for each robot. Thus, it is possible for the safety actuator 16 to turn on and off the power supply to the motors of the robots individually and to turn off the power supply to all of the robots. In one embodiment, each of the safety logic units 14 is allowed to make a decision to stop one or more of the robots based on the sensor data, and to generate a stop command including information about which of the robots to be stopped, and the safety actuator is configured to break the power supply to the motors of one or more of the robots upon receiving the stop commands.

Further, the safety actuator 16 may include a data processing unit 20 configured to communicate with the robot controllers 4 and to generate one or more control signals to the circuit breaker(s) 18. In this embodiment, the data processing unit 20 communicates with the robot controllers 4 via the information sharing device 12. At least some of the safety logic units 14 of the robot controllers are configured to generate safety commands to the safety actuator based on the received sensor data. The safety command is, for example, a command to stop one or more of the robots, or to switch off the power supply to the motors 6 of the robots.

The information sharing device is configured to receive the safety commands from the robot controllers and to transmit the safety commands to the safety actuator. In one embodiment of the invention, the robot controllers 4 are configured to send the safety commands to the information sharing device 12, and the information sharing device is configured to receive the safety commands from the robot controllers, and to transmit the received safety commands to the safety actuator 16 and to the robot controllers 4. Thus, the information sharing device 12 is configured to broadcast the safety commands from the robot controllers 4 to the other devices connected to the information sharing device 12, i.e. to the safety actuator 16 and the robot controllers 4. This embodiment allows the robot controllers to act on safety commands from the other robot controllers. All of the robot controllers share the outputs from the safety sensors as well as the outputs from the safety logics of each of the controllers.

Alternatively, there can be a direct communication link from the robot controller towards the safety actuator and the robot controller can transmit the commands directly to the safety actuator.

Each of the safety sensors 2a-d is configured to repeatedly send safety data to the information sharing device 12 within a first time interval. For example, the first time interval is between 10 and 50 ms. Further, the robot controllers are configured to repeatedly send safety commands to the safety actuator 16 within a second time interval provided that safety data has been received within the second time interval. The robot controllers are configured not to send any safety command to the safety actuator 16 if no safety data has been received within the second time interval. The second time interval should be longer than the first time interval in order to take account of time delays in the data transfer between the sensor and the robot controller, and to ensure that the robot controller has enough time to receive the sensor data. For example, the second time interval is between 60 and 150 ms. In this embodiment, the safety actuator 16 comprises a watch dog module 22 configured to detect that a safety command has been received from each of the robot controllers within a defined time limit. The watch dog module 22 is, for example, a software module executed by the data processing unit 20. The defined time limit should be longer than the second time interval in order to take account of time delays in the data transfer between the robot controller and the safety actuator, and to ensure that the safety actuator has enough time to receive the sensor data and by that avoid to unnecessarily stop the robot. For example, the defined time limit is between 150 and 300 ms.

The safety actuator 16 is configured to carry out a safety action so that the robot is placed into a safe state, for example, to break the power supply to the motors of the robot, if no safety command is received from the robot within the defined time limit. At least one of the robot controllers, and suitably all of the robot controllers connected to the information sharing device 12, are configured to repeatedly send safety commands to the safety actuator 16 within the second time interval, and the safety actuator is configured to detect if a safety command is missing from any of the robot controllers. The safety actuator 16 is configured to place the robot in a safe state if no safety command has been received from the robot within the defined time period. The safety command is, for example, a message with information that everything is ok.

Alternatively, the safety actuator 16 can be configured to break the power supply to the motors of all of the robots in the robot cell if no safety command is received from one of the robots within the defined time limit. For example, the circuit breaker 18 is a relay configured to be active high, and the control signal from the data processing unit 20 to the relay is high as long as the watch dog module 22 receives safety commands from all of the robot controllers, and the control signal is turned low if no safety command has been received from one of the robots within the defined time limit.

## Claims

1. An industrial robot system comprising:
- a plurality of robots (1a-e), each robot including a robot controller (4) for controlling the motions of the robot,
- at least one safety sensor (2a-d) configured to detect hazardous situations in the vicinity of the robots and to produce sensor data, and
- an information sharing device (12) connected to the at least one safety sensor (2a-d) and to the robot controllers (4), and the information sharing device (12) is configured to distribute sensor
data from the at least one safety sensor to the robot controllers, and each of the robot controllers is configured to receive sensor data from at least one safety sensor, and comprises a safety logic unit (14) configured to generate safety commands based on sensor data from the at least one safety sensor, each safety command comprising an instruction to reduce the speed or to stop the motions of the robot in which the safety logic unit (14) is included,
wherein the information sharing device (12) is configured to receive the safety commands from the robot controllers (4) and to distribute the safety commands to the robot controllers, and each of the safety logic units (14) is configured to generate further safety commands based on received safety commands from the other robot controllers.

2. The robot system according to claim 1, wherein the robot system comprises a plurality of safety sensors (2a-d) configured to detect hazardous situations in the vicinity of the robots and to produce sensor data, the information sharing device is configured to distribute sensor data from the safety sensors to the robot controllers, and each of the robot controllers is configured to receive sensor data from the safety sensors, and comprises a safety logic unit (14) configured to generate safety commands based on sensor data from more than one of the safety sensors.

3. The robot system according to claim 2, wherein the information sharing device (12) is configured to distribute sensor data from each of the safety sensors (2a-d) to each of the robot controllers (4), and each of the robot controllers (4) is configured to select which sensor data is to be forwarded to the safety logic unit (14).

4. The robot system according to any of the preceding claims, wherein the information sharing device (12) is a network switch configured to communicate with the robot controllers (4) and the at least one safety sensor (2a-d) using a network protocol.

5. The robot system according to any of the preceding claims, wherein at least one of the safety sensors (2a-d) is configured to detect a human in an area in the vicinity of the robots.

6. The robot system according to any of the preceding claims, wherein each of the safety logic units (14) is allowed to make a decision to reduce the speed of the robot based on the sensor data.

7. The robot system according to any of the preceding claims, wherein each of the robot controllers (4) includes a safety stop unit (15) capable to stop the motions of the robot, and each of the safety logic units (14) is allowed to make a decision to stop the motions of the robot based on received sensor data and received safety commands from the other robot controllers.

8. The robot system according to any of the preceding claims, wherein the system comprises at least one safety actuator (16) configured to receive the safety commands from the robot controllers, and configured to carry out safety actions based on the safety commands from the robot controllers.

9. The robot system according to claim 8, wherein the robot controllers (4) are configured to send the safety commands to the information sharing device (12), the information sharing device is configured to receive the safety commands from the robot controllers, and to transmit the received safety commands to the safety actuator (16) and to the robot controllers.

10. The robot system according to claim 8 or 9, wherein the at least one safety sensor (2a-d) is configured to repeatedly send safety data to the information sharing device (12) within a first time interval, each of the robot controllers (4) is configured to repeatedly send safety commands within a second time interval provided that safety data has been received within the second time interval, and the safety actuator (16) is configured to carry out a safety action if no safety command is received from one of the robots (1a-e) within a defined time limit.

11. The robot system according to claim 10, wherein said second time interval is longer than said first time interval, and said defined time limit is longer than the second time interval.

12. The robot system according to claim 10 or 11, wherein the safety actuator (16) is capable to stop the motions of one or more of the robots if no safety command is received from one of the robots within the defined time limit.

13. The robot system according to any of the claims 8 to 12, wherein each of the robots (1a-e) comprises a plurality of motors (6), and the safety actuator (16) is capable to switch off the power supply to the motors of each of the robots.

14. The robot system according any of the claims 8 to 12, wherein at least one of the safety logic units (14) is configured to make a decision to stop one or more of the robots (1a-e) based on the sensor data, and to generate a stop command including information about which of the robots to be stopped, and the safety actuator (16) is configured to break the power supply to the motors of one or more of the robots upon receiving the stop command.

## Patentansprüche

1. Industrierobotersystem, das Folgendes umfasst:
- mehrere Roboter (1a-e), wobei jeder Roboter eine Robotersteuereinheit (4) zum Steuern der Bewegungen des Roboters enthält,
- mindestens einen Sicherheitssensor (2a-d), der konfiguriert ist, gefährliche Situationen in der Umgebung der Roboter zur detektieren und Sensordaten zu erzeugen, und
- eine Vorrichtung (12) zur gemeinsamen Nutzung von Informationen, die mit dem mindestens einen Sicherheitssensor (2a-d) und mit den Robotersteuereinheiten (4) verbunden ist, wobei die Vorrichtung (12) zur gemeinsamen Nutzung von Informationen konfiguriert ist, Sensordaten von dem mindestens einen Sicherheitssensor an die Robotersteuereinheiten zu verteilen, und jede der Robotersteuereinheiten konfiguriert ist, Sensordaten von mindestens einem Sicherheitssensor zu empfangen, und eine Sicherheitslogikeinheit (14) umfasst, die konfiguriert ist, auf der Grundlage der Sensordaten von dem mindestens einen Sicherheitssensor Sicherheitsbefehle zu erzeugen, wobei jeder Sicherheitsbefehl eine Anweisung, die Geschwindigkeit des Roboters, in dem die Sicherheitslogikeinheit (14) enthalten ist, zu verringern oder seine Bewegungen anzuhalten, umfasst, wobei die Vorrichtung (12) zur gemeinsamen Nutzung von Informationen konfiguriert ist, die Sicherheitsbefehle von den Robotersteuereinheiten (4) zu empfangen und die Sicherheitsbefehle an die Robotersteuereinheiten zu verteilen, und jede der Sicherheitslogikeinheiten (14) konfiguriert ist, auf der Grundlage der empfangenen Sicherheitsbefehle von den anderen Robotersteuereinheiten weitere Sicherheitsbefehle zu erzeugen.

2. Robotersystem nach Anspruch 1, wobei das Robotersystem mehrere Sicherheitssensoren (2a-d) umfasst, die konfiguriert sind, gefährliche Situationen in der Umgebung der Roboter zu detektieren und Sensordaten zu erzeugen, wobei die Vorrichtung zur gemeinsamen Nutzung von Informationen konfiguriert ist, Sensordaten von den Sicherheitssensoren an die Robotersteuereinheiten zu verteilen, und jede der Robotersteuereinheiten konfiguriert ist, Sensordaten von den Sicherheitssensoren zu empfangen, und eine Sicherheitslogikeinheit (14) umfasst, die konfiguriert ist, auf der Grundlage von Sensordaten von mehr als einem der Sicherheitssensoren Sicherheitsbefehle zu erzeugen.

3. Robotersystem nach Anspruch 2, wobei die Vorrichtung (12) zur gemeinsamen Nutzung von Informationen konfiguriert ist, Sensordaten von jedem der Sicherheitssensoren (2a-d) an jede der Robotersteuereinheiten (4) zu verteilen, und jede der Robotersteuereinheiten (4) konfiguriert ist auszuwählen, welche Sensordaten an die Sicherheitslogikeinheit (14) weitergeleitet werden sollen.

4. Robotersystem nach einem der vorhergehenden Ansprüche, wobei die Vorrichtung (12) zur gemeinsamen Nutzung von Informationen ein Netzverteiler ist, der konfiguriert ist, unter Verwendung eines Netzprotokolls mit den Robotersteuereinheiten (4) und dem mindestens einen Sicherheitssensor (2a-d) zu kommunizieren.

5. Robotersystem nach einem der vorhergehenden Ansprüche, wobei mindestens einer der Sicherheitssensoren (2a-d) konfiguriert ist, einen Menschen in einem Bereich in der Umgebung der Roboter zu detektieren.

6. Robotersystem nach einem der vorhergehenden Ansprüche, wobei für jede der Sicherheitslogikeinheiten (14) zugelassen ist, dass sie auf der Grundlage der Sensordaten eine Entscheidung trifft, die Geschwindigkeit des Roboters zu verringern.

7. Robotersystem nach einem der vorhergehenden Ansprüche, wobei jede der Robotersteuereinheiten (4) eine Sicherheitsanhalteinheit (15) enthält, die die Bewegungen des Roboters anhalten kann, und für jede der Sicherheitslogikeinheiten (14) zugelassen ist, auf der Grundlage der empfangenen Sensordaten und der empfangenen Sicherheitsbefehle von den anderen Robotersteuereinheiten eine Entscheidung zu treffen, die Bewegungen des Roboters anzuhalten.

8. Robotersystem nach einem der vorhergehenden Ansprüche, wobei das System mindestens einen Sicherheitsaktuator (16) umfasst, der konfiguriert ist, die Sicherheitsbefehle von den Robotersteuereinheiten zu empfangen, und konfiguriert ist, auf der Grundlage der Sicherheitsbefehle von den Robotersteuereinheiten Sicherheitsmaßnahmen durchzuführen.

9. Robotersystem nach Anspruch 8, wobei die Robotersteuereinheiten (4) konfiguriert sind, die Sicherheitsbefehle an die Vorrichtung (12) zur gemeinsamen Nutzung von Informationen zu senden, wobei die Vorrichtung zur gemeinsamen Nutzung von Informationen konfiguriert ist, die Sicherheitsbefehle von den Robotersteuereinheiten zu empfangen und die empfangenen Sicherheitsbefehle an den Sicherheitsaktuator (16) und an die Robotersteuereinheiten zu übertragen.

10. Robotersystem nach Anspruch 8 oder 9, wobei der mindestens eine Sicherheitssensor (2a-d) konfiguriert ist, innerhalb eines ersten Zeitraums wiederholt Sicherheitsdaten an die Vorrichtung (12) zur gemeinsamen Nutzung von Informationen zu senden, jede der Robotersteuereinheiten (4) konfiguriert ist, innerhalb eines zweiten Zeitraums wiederholt Sicherheitsbefehle zu senden, vorausgesetzt, dass die Sicherheitsdaten innerhalb des zweiten Zeitraums empfangen worden sind, und der Sicherheitsaktuator (16) konfiguriert ist, eine Sicherheitsmaßnahme durchzuführen, wenn innerhalb eines definierten Zeitgrenzwertes von einem der Roboter (1a-e) kein Sicherheitsbefehl empfangen wird.

11. Robotersystem nach Anspruch 10, wobei der zweite Zeitraum länger als der erste Zeitraum ist und der definierte Zeitgrenzwert länger als der zweite Zeitraum ist.

12. Robotersystem nach Anspruch 10 oder 11, wobei der Sicherheitsaktuator (16) die Bewegungen eines oder mehrerer der Roboter anhalten kann, wenn innerhalb des definierten Zeitgrenzwertes von einem der Roboter kein Sicherheitsbefehl empfangen wird.

13. Robotersystem nach einem der Ansprüche 8 bis 12, wobei jeder der Roboter (1a-e) mehrere Motoren (6) umfasst und der Sicherheitsaktuator (16) die Stromversorgung für die Motoren von jedem der Roboter ausschalten kann.

14. Robotersystem nach einem der Ansprüche 8 bis 12, wobei mindestens eine der Sicherheitslogikeinheiten (14) konfiguriert ist, auf der Grundlage der Sensordaten eine Entscheidung zu treffen, einen oder mehrere der Roboter (1a-e) anzuhalten, und einen Anhaltebefehl zu erzeugen, der Informationen darüber, welche der Roboter angehalten werden sollen, enthalten, und der Sicherheitsaktuator (16) konfiguriert ist, aufgrund des Empfangens des Anhaltebefehls die Stromversorgung für die Motoren eines oder mehrerer der Roboter zu unterbrechen.

## Revendications

1. Système de robots industriels, comprenant :
- une pluralité de robots (1a-e), chaque robot comportant un contrôleur (4) de robot pour commander les mouvements du robot,
- au moins un capteur de sécurité (2a-d) configuré pour détecter des situations dangereuses aux abords des robots et produire des données de capteurs, et
- un dispositif de partage d'informations (12) connecté à l'au moins un capteur de sécurité (2a-d) et aux contrôleurs (4) de robot, et le dispositif de partage d'informations (12) étant configuré pour distribuer des données de capteurs provenant de l'au moins un capteur de sécurité aux contrôleurs de robot, et chacun des contrôleurs de robot étant configuré pour recevoir des données de capteurs provenant d'au moins un capteur de sécurité, et comprenant une unité de logique de sécurité (14) configurée pour générer des commandes de sécurité sur la base de données de capteurs provenant de l'au moins un capteur de sécurité, chaque commande de sécurité comprenant une instruction de réduire la vitesse ou d'arrêter les mouvements du robot qui comprend l'unité de logique de sécurité (14), le dispositif de partage d'informations (12) étant configuré pour recevoir les commandes de sécurité provenant des contrôleurs (4) de robot et pour distribuer les commandes de sécurité aux contrôleurs de robot, et chacune des unités de logique de sécurité (14) étant configurée pour générer d'autres commandes de sécurité sur la base de commandes de sécurité reçues provenant des autres contrôleurs de robot.

2. Système de robots selon la revendication 1, le système de robots comprenant une pluralité de capteurs de sécurité (2a-d) configurés pour détecter des situations dangereuses aux abords des robots et pour produire des données de capteurs, le dispositif de partage d'informations étant configuré pour distribuer des données de capteurs provenant des capteurs de sécurité aux contrôleurs de robot, et chacun des contrôleurs de robot étant configuré pour recevoir des données de capteurs provenant des capteurs de sécurité, et comprenant une unité de logique de sécurité (14) configurée pour générer des commandes de sécurité sur la base de données de capteurs provenant de plus d'un des capteurs de sécurité.

3. Système de robots selon la revendication 2, dans lequel le dispositif de partage d'informations (12) est configuré pour distribuer des données de capteurs provenant de chacun des capteurs de sécurité (2a-d) à chacun des contrôleurs (4) de robot, et chacun des contrôleurs (4) de robot est configuré pour sélectionner quelles données de capteurs doivent être transférées à l'unité de logique de sécurité (14).

4. Système de robots selon l'une quelconque des revendications précédentes, dans lequel le dispositif de partage d'informations (12) est un commutateur réseau configuré pour communiquer avec les contrôleurs (4) de robot et l'au moins un capteur de sécurité (2a-d) au moyen d'un protocole réseau.

5. Système de robots selon l'une quelconque des revendications précédentes, dans lequel au moins un des capteurs de sécurité (2a-d) est configuré pour détecter un être humain dans une zone aux abords des robots.

6. Système de robots selon l'une quelconque des revendications précédentes, dans lequel chacune des unités de logique de sécurité (14) est autorisée à prendre une décision de réduire la vitesse du robot sur la base des données de capteurs.

7. Système de robots selon l'une quelconque des revendications précédentes, dans lequel chacun des contrôleurs (4) de robot comporte une unité d'arrêt de sécurité (15) apte à arrêter les mouvements du robot, et chacune des unités de logique de sécurité (14) est autorisée à prendre une décision d'arrêter les mouvements du robot sur la base de données de capteurs reçues et de commandes de sécurité reçues provenant des autres contrôleurs de robot.

8. Système de robots selon l'une quelconque des revendications précédentes, le système comprenant au moins un actionneur de sécurité (16) configuré pour recevoir les commandes de sécurité provenant des contrôleurs de robot, et configuré pour exécuter des actions de sécurité sur la base des commandes de sécurité provenant des contrôleurs de robot.

9. Système de robots selon la revendication 8, dans lequel les contrôleurs (4) de robot sont configurés pour envoyer les commandes de sécurité au dispositif de partage d'informations (12), le dispositif de partage d'informations est configuré pour recevoir les commandes de sécurité provenant des contrôleurs de robot, et pour transmettre les commandes de sécurité reçues à l'actionneur de sécurité (16) et aux contrôleurs de robot.

10. Système de robots selon la revendication 8 ou 9, dans lequel l'au moins un capteur de sécurité (2a-d) est configuré pour envoyer de manière répétée des données de sécurité au dispositif de partage d'informations (12) dans un premier intervalle de temps, chacun des contrôleurs de robot (4) est configuré pour envoyer de manière répétée des commandes de sécurité dans un deuxième intervalle de temps pour autant que des données de sécurité aient été reçues dans le deuxième intervalle de temps, et l'actionneur de sécurité (16) est configuré pour exécuter une action de sécurité si aucune commande de sécurité n'est reçue de l'un des robots (1a-e) dans une limite de temps définie.

11. Système de robots selon la revendication 10, dans lequel ledit deuxième intervalle de temps est plus long que ledit premier intervalle de temps, et ladite limite de temps définie est plus longue que le deuxième intervalle de temps.

12. Système de robots selon la revendication 10 ou 11, dans lequel l'actionneur de sécurité (16) est apte à arrêter les mouvements d'un ou de plusieurs des robots si aucune commande de sécurité n'est reçue de l'un des robots dans la limite de temps définie.

13. Système de robots selon l'une quelconque des revendications 8 à 12, dans lequel chacun des robots (1a-e) comprend une pluralité de moteurs (6), et l'actionneur de sécurité (16) est apte à couper l'alimentation électrique des moteurs de chacun des robots.

14. Système de robots selon l'une quelconque des revendications 8 à 12, dans lequel au moins une des unités de logique de sécurité (14) est configurée pour prendre une décision d'arrêter un ou plusieurs des robots (1a-e) sur la base des données de capteurs, et pour générer une commande d'arrêt comportant des informations indiquant lequel ou lesquels des robots doivent être arrêtés, et l'actionneur de sécurité (16) est configuré pour interrompre l'alimentation électrique des moteurs d'un ou de plusieurs robots lors de la réception de la commande d'arrêt.
